# EUROPÄISCHE PATENTSCHRIFT

(11) **EP 0 784 597 B1**
(45) Veröffentlichungstag und Bekanntmachung des Hinweises auf die Patenterteilung: **01.03.2000**
(21) Anmeldenummer: 95933297.4
(22) Anmeldetag: 27.09.1995
(51) Int. Cl.: C02F 1/78, C02F 3/30, C02F 1/32

(54) **VERFAHREN UND ANLAGE ZUM BIOLOGISCHEN ABBAU VON SCHADSTOFFEN IM WASSER**
PROCESS AND ARRANGEMENT FOR BIODEGRADING POLLUTANTS IN WATER
PROCEDE ET DISPOSITIF DE BIODEGRADATION DE POLLUANTS PRESENTS DANS L'EAU

(30) Priorität: 29.09.1994 DE 4434753
(43) Veröffentlichungstag der Anmeldung: 23.07.1997
(73) Patentinhaber: Wedeco Umwelttechnologie Wasser-Boden-Luft GmbH, D-32501 Herford (DE)
(72) Erfinder: LEITZKE, Ortwin, D-41564 Kaarst (DE)
(74) Vertreter: Patentanwälte Thömen & Körner
(86) Internationale Anmeldenummer: DE9501334
(87) Internationale Veröffentlichungsnummer: WO9609987

(56) Entgegenhaltungen:
- EP-A- 0 438 073
- EP-A- 0 645 347
- PATENT ABSTRACTS OF JAPAN vol. 950 no. 004 & JP,A,07 088495 (KURITA WATER IND LTD) 4.April 1995,
- DATABASE WPI Section Ch, Week 9541 Derwent Publications Ltd., London, GB; Class D15, AN 95316272 & JP,A,07 214 093 (KUBOTA CORP.) , 15.August 1995
- PATENT ABSTRACTS OF JAPAN vol. 950 no. 003 & JP,A,07 080481 (KURITA WATER IND LTD) 28.März 1995,
- PATENT ABSTRACTS OF JAPAN vol. 018 no. 371 (C-1224) ,13.Juli 1994 & JP,A,06 099188 (KURITA WATER IND LTD) 12.April 1994,

## Beschreibung

Die Erfindung bezieht sich auf ein Verfahren gemäß dem Oberbegriff des Anspruchs 1 und eine entsprechende Anlage nach dem Oberbegriff des Anspruchs 10.

Die Erfindung befaßt sich mit der Aufbereitung und Entsorgung von im Wasser enthaltenen Schadstoffen, die rein biologisch schwer oder nicht abbaubar sind, z.B. toxische Substanzen in Sickerwässern aus Mülldeponien oder Industrieabwässern wie etwa chlorierte Kohlenwasserstoffe, Dioxine, Pestizide oder Farbstoffe.

Es ist üblich, derartige Industrieabwässer und Deponiesickerwässer mit einer Kombination aus Biologie und Ozonung zu behandeln, um die gesetzlich vorgeschriebenen Einleitwerte in den Vorfluter für CSB (=chemischer Sauerstoffbedarf), BSB₅ (=biologischer Sauerstoffbedarf), AOₓ (=absorbierbare organische Halogenkohlenwasserstoffe) und NH₄-N (=Stickstoff aus Ammonium) zu erreichen. Dazu werden konventionelle drucklose Belebtschlammbiologien oder Druckbehälterbiologien mit Belebtschlamm oder auf Trägermaterialien fixierte Filmbiologien benutzt. Die dabei nicht biologisch abgebauten Substanzen versucht man mit Ozon zu biologisch abbaubaren Säuren oder zu Kohlenstoffdioxid durchzuoxidieren.

Eine solche einer Biologie nachschaltbare Ozonbehandlung ist Gegenstand der EP 478 583 B 1.

Um Energie zu sparen ist es auch bekannt, die biologisch nicht abgebauten Substanzen mit Ozon nur anzucracken und dann einer nachgeschalteten Biologie zuzuführen, wo dann ein weiterer biologischer Abbauprozeß stattfindet, der die in der ersten biologischen Stufe nicht abgebauten angecrackten Substanzen dann bewältigen kann. Solche Anlagen werden von der Anmelderin in den Häfen von Amsterdam und Rotterdam betrieben, um Industrieabwässer so aufzubereiten, daß sie in den Vorfluter geleitet werden können.

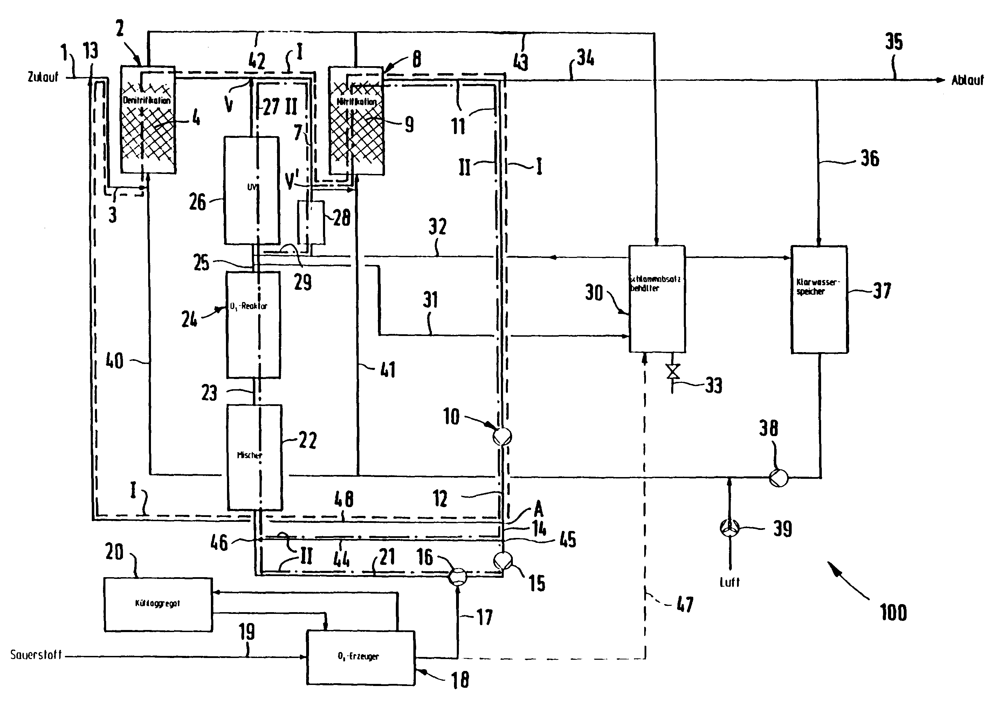

Bei den Kombinationen Vorbiologie, Ozonung und Nachbiologie in verschiedenen Behältern und Stufen entstehen große Bauvolumina. Außerdem werden die Kreislaufwasserströme für die vor- und nachgeschaltete Biologie und Ozonung separat geführt und betrieben. Deshalb entstehen auch hohe Energiekosten für die Pumpen. Üblicherweise werden die Biologien mit Sauerstoff aus der Luft versorgt, wobei für den Betrieb des Gaseintragsapparates, d.h. der Kompressoren, erneut Energie notwendig ist. Werden die Biologien mit technischem Sauerstoff versorgt, so ist es auch bereits bekannt, den technischen Sauerstoff für die Erzeugung des für die Ozonung benötigten Ozons in einem separaten System reagieren zu lassen und danach, wenn also das Ozon nicht mehr vorhanden ist, für die Biologie zu verwenden. Aber auch in diesem Fall wird der Sauerstoff, der nicht in Ozon umgewandelt und nicht vom Kreislaufwasser der Anlage absorbiert wurde, separat aufgefangen und dem Ozonerzeuger wieder zugeführt, wie es sich z.B. aus der EP 478 583, Fig. 3 ergibt, wozu Pumpleistung und Anlagenkomponenten erforderlich sind

Den Oberbegriffen der Ansprüche 1 und 10 liegt die DE 40 00 292 A1 zugrunde, die ein Verfahren zur Reinigung von mit schwer abbaubaren Verbindungen belastetem Wasser unter Anwendung von Ozon zum Gegenstand hat, bei welchem vorgereinigtes Wasser einer Ozonisierung mit einer solchen Ozonkonzentration unterzogen wird, bei der nur eine Anoxidierung der in dem Wasser enthaltenen schwer abbaubaren Verbindungen erfolgt, die dadurch einen biologischen Abbau durch mikrobiologisch besiedelte Aktivkohle zugänglich wird. Eine ausreichende Wirksamkeit der Ozonisierung erfordert hierbei eine aufwendige mehrstufige Reaktionsbehälteranordung.

Der Erfindung liegt die Aufgabe zugrunde, die Nachteile der bisherigen Technik, die in hohen Investitionen für Behälter und Aggregate und hohem Energieaufwand für die Wasserkreisläufe zur Versorgung der Biologie und den separaten Wasserkreisläufen zum Ozoneintrag und in nicht effektiver Sauerstoffnutzung liegen, zu beseitigen.

Diese Aufgabe wird in ihrem verfahrensmäßigen Aspekt durch die in Anspruch 1 wiedergegebene Erfindung gelöst.

Es werden auch hierbei eine biologische Behandlung und eine Ozonbehandlung so kombiniert, daß Ozon nur benutzt wird, um die biologisch abbaubaren Substanzen so anzuoxidieren (anzucracken, zu konditionieren), daß sie biologisch angreifbar werden. Es sind ein Hauptkreislauf, in welchem die Hauptmenge des in Behandlung befindlichen Wassers durch die Biologie zirkuliert, und ein Teilkreislauf vorhanden, in welchem an einer abgezweigten Teilmenge dieses Wassers der Ozoneintrag und die Ozonreaktion stattfindet. Die ozonbehandelte Teilwassermenge wird kontinuierlich wieder in die in dem Hauptkreislauf umlaufende Hauptwassermenge überführt, die partiell immer wieder neu einer Ozonisierung unterworfen wird. Der Umfang dieser Behandlung bestimmt sich nach der im Einzelfall gegebenen Belastung des Wassers. Es sowohl Aggregate als auch Sauerstoffgas eingespart, weil beide für mehrere Aufgaben gleichzeitig benutzt werden, nämlich für die Ozonisierung und die Unterhaltung der Biologie. Durch das große Volumen des Kreislaufwasserstroms im Verhältnis zum Gasvolumenstrom und durch die ständig wiederholte Einwirkung im Kreislauf werden ein hoher Ozon- und Sauerstoffabsorptionsgrad und eine entsprechend intensive Abbauwirkung erreicht.

Eine wichtige Ausgestaltung der Erfindung ist Gegenstand des Anspruchs 2.

Die demnach vorhandenen zwei Biologien unterschiedlichen Charakters werden ständig im Kreislauf durchlaufen und wirken zu einer durchgreifenden Reduzierung der Schadstoffe zusammen. Die Bakterien in der anaeroben Biologie benötigen O₂ und H. Das O₂ wird von den Bakterien aus dem im Wasser vorhandenen Nitrat geholt, das dadurch zu unschädlichem N₂ reduziert wird. Das H stammt aus dem CSB im Wasser, dem zusätzliche H-Quellen wie Methanol oder Essigsäure zugesetzt sein können. NH₄ wird in der aeroben Biologie zu Nitrat oxidiert, welches mit dem Kreislaufwasser des Hauptkreislaufs wieder in die anaerobe Biologie gelangt und dort zu N₂ reduziert wird.

Bei der Wiedereinleitung des ozonbehandelten Wassers in den Hauptkreislauf muß darauf geachtet werden, daß kein Ozon in die Biologie gelangt, weil dies den Tod der Bakterien zur Folge hätte (Anspruch 3).

Die Fernhaltung des Ozons von der Biologie kann in verschiedener Weise verwirklicht werden.

Gemäß Anspruch 4 kann die Ozonmenge so bemessen werden, daß sich das Ozon in der Reaktorbehälteranordnung bei der Anoxidierung der Schadstoffe vollständig verbraucht und in dem die Reaktorbehälteranordnung verlassenden Wasser kein Ozon mehr enthalten ist.

Es ist aber gemäß Anspruch 5 auch möglich, in dem Wasser nach dem Passieren der Reaktorbehälteranordnung noch verbliebenes Ozon in einer UV-Bestrahlungsanlage in sauerstoffhaltige Moleküle oder Radikale abzubauen, die für die Biologie nicht schädlich sind und sogar noch eine intensivere Zersetzung z.B. von Halogenkohlenwasserstoffen bewirken.

Eine weitere alternative Möglichkeit zum Schutz der Biologie vor Ozon ist dessen katalytische Zerstörung nach Anspruch 6.

Es ist auch möglich, gemäß Anspruch 7 das Kreislaufwasser mit nach dem Passieren der Reaktorbehälteranordnung noch verbliebenem Ozon in einen Schlammabsetzbehälter mit Überschußschlamm aus der Biologie zu leiten, um die darin enthaltenen Schadstoffe anzuoxidieren und für den weiteren biologischen Abbau zu konditionieren.

Ein vorteilhafter Aspekt der Erfindung ist Gegenstand des Anspruchs 8.

Der Biologiebehälteranordnung kann demnach kontinuierlich nicht ozontes Wasser mit Schadstoffen zudosiert werden, so daß die Behälternanordnung für die aerobe Biologie im Gegensatz zu früher in sich gleichzeitig die Funktionen einer Vor- und einer Nachbiologie vereint, indem ihr sowohl nicht ozontes Rohwasser als auch schon einmal biologisch vorbehandeltes und dann ozontes Wasser zugeleitet werden.

Das Merkmal des Anspruchs 9 ist in der Praxis wichtig für die Begrenzung des apparativen Aufwandes.

Die Ansprüche 10 bis 20 geben den apparativen Aspekt der Erfindung in Gestalt einer entsprechenden Anlage wieder.

Für eine wirksame Ozonbehandlung bedarf es insbesondere, wenn die Behandlung in einer strömenden Flüssigkeitsmenge stattfindet, nicht unerheblicher Ozonmengen. Zu deren Bereitstellung ist ein Ozonerzeuger mit stiller Entladung geeignet (Anspruch 20), weil die darin produzierbaren Ozonmengen zwei Größenordnungen über denen anderer Ozonerzeuger liegen.

Wenn von "Wasser" die Rde ist, so sind damit auch wässrige Flüssigkeiten gemeint, die bestimmte Anteile anderer Flüssigkeiten enthalten können, soweit dies die Biologie nicht stören.

In der Zeichnung ist ein Diagramm einer erfindungsgemäßen Anlage dargestellt.

Die als Ganzes mit 100 bezeichnete Anlage hat als Hauptkomponenten einen Hauptkreislauf I mit einer Behälteranordnung 2 mit einer anaeroben Biologie und einen Teilkreislauf II, der an der Abzweigstelle A von dem Hauptkreislauf I abzweigt, eine Eintragvorrichtung 16 für ozonhaltiges Gas und eine Reaktionsbehälteranordnung 24, in der das Ozon mit den Schadstoffen reagiert, umfaßt und an einer Vereinigungsstelle V bzw. V' wieder in den Hauptkreislauf I einmündet, worauf die beiden Kreisläufe gemeinsam eine Behälteranordnung 8 mit einer aeroben Biologie durchsetzen.

Mit biologisch schwer abbaubaren Schadstoffen (NH, CSB und AOₓ) belastetes Wasser wird an dem Zulauf 1 in den durch eine gestrichelte Linie gekennzeichneten Hauptkreislauf I eingespeist. Sie gelangt zunächst über die Leitung 3 von unten in die Behälteranordnung 2 mit einer anaeroben Biologie. Die Behälteranordnung 2 ist nur schematisch als Rechteck wiedergegeben und kann aus einem und mehreren einzelnen Behältern bestehen. Die Behälteranordnung 2 ist mit einer durch die Kreuzschraffur angedeuteten Füllung 4 aus Trägerkörpern, z.B. Tonkugeln, versehen, auf denen sich ein biologischer Rasen fixiert, d.h. eine ausgedehnte Kultur von Bakterien, die die in dem Wasser mitgeführten Schadstoffe angreifen. In der Behälteranordnung 2 findet in einer sauerstoffarmen Atmosphäre eine Denitrifikation statt, bei der sich die Bakterien den lebensnotwendigen Sauerstoff aus den Inhaltsstoffen des Wassers holen, d.h. in dem Kreislaufwasser, das in noch zu beschreibender Weise in der Leitung 40 herankommt und ebenfalls in die Behälteranordnung 2 eintritt, enthaltenes NO₃ wird zu N₂ reduziert. Außerdem hat die Behälteranordnung 2 eine Filtrationswirkung und leistet auch schon eine gewisse biologische CSB-Reduzierung bis zu 50%.

Das Kreislaufwasser gelangt aus der Behälteranordnung 2 über die Leitung 7 von unten in eine Behälteranordnung 8 mit einer aeroben Biologie, die ebenfalls wieder aus einem oder mehreren Einzelbehältern bestehen kann und eine Füllung 9 aus Trägerkörpern aufweist, auf denen ein biologischer Rasen fixiert ist. Es findet eine Nitrifikation statt. In dem Wasser enthaltenes NH₃ wird zu NO₃ oxidiert, welches mit dem im Hauptkreislauf I geführten Kreislaufwasser anschließend über die Leitungen 11 und 48 wieder in die Behälteranordnung 2 gelangt und dort zu molekularem Stickstoff reduziert wird.

Die in dem Ausführungsbeispiel in den Behälteranordnungen 2 und 8 enthaltenen Biologien sind zwar als Festbettbiologien beschrieben, könnten aber auch Schlammbiologien sein.

Das Wasser aus der Behälteranordnung 8 gelangt über die Leitung 11 zu einer Pumpenanordnung 10, die die Umwälzung im Kreislauf bewerkstelligt und, wie erwähnt, einen Anteil des aus der Behälteranordnung 8 ausgetretenen Wassers über die bei 14 aus der Pumpenaustrittsleitung 12 abzweigende Rückleitung 48 in dem Hauptkreislauf I zum Zulauf 1 zurückführt, wo sie sich bei 13 mit dem gerade zugelaufenen Rohwasser vereinigt und zusammen mit diesem über die Leitung 3 in die Behälteranordnung 2 eingeleitet wird.

Die Pumpenanordnung 10, die als einzelne Pumpe dargestellt ist, aber auch aus mehreren an verschiedenen Stellen angeordneten Pumpen bestehen kann, erzeugt nur einen Druck, der zur Umwälzung des Wassers im Kreislauf und zur Überwindung der hydraulischen Widerstände ausreicht. Es sind also nirgends Druckgefäße erforderlich.

An der Pumpenanordnung 10 nachgeschalteten Abzweigstelle A zweigt von dem Hauptkreislauf I (gestrichelt) in der Leitung 14 ein Teilkreislauf II ab, der durch eine strichpunktierte Linie hervorgehoben ist.

Die Hauptmenge des in den Teilkreislauf II abgezweigten Wassers wird über die Leitung 14 und die an der Verbindungsstelle 45 abzweigende Hauptleitung 44 geführt, die zu dem Teilkreislauf II gehört. An der der Pumpenanordnung 10 nachgeschalteten Verbindungsstelle 45 der Leitungen 12 und 44 wird ein Teil des Wassers in einer Leitung 21 aus dem Kreislauf abgezweigt und über eine Pumpe 15 auf einen geringfügig erhöhten Druck bis etwa 4 Bar gebracht. Das Wasser passiert dann eine Eintragvorrichtung 16 in Gestalt eines Injektors, in welchem ihm über die Leitung 17 ozonhaltiges Gas aus einem Ozonerzeuger 18 injiziert wird. Die Eintragvorrichtung 16 muß nicht unbedingt ein Injektor sein. Wenn der Ozonerzeuger 18 unter einem ausreichend hohen Druck von z.B. zwei Bar arbeitet, kann der Eintrag des ozonhaltigen Gases auch an einem einfachen Anschluß erfolgen.

Der Kreislaufteil mit der Pumpe 15, dem Injektor 16 und der Leitung 21, in welchem also die Zumischung des Ozons geschieht und der sich an der Stelle 46 wieder mit der zu ihm parallelen Leitung 55 vereinigt, gehört ebenfalls zu dem Teilkreislauf II.

Wenn die Pumpenanordnung 10 beispielsweise 100 m³/h fördert, könnten über die Leitung 44 beispielsweise etwa 80 m³/h strömen, über die Leitung 21 etwa 20 m/h. Der über die Leitung 12 in die Behälteranordnung 2 mit der anaeroben Biologie zurückgeführte Wasseranteil ist relativ geringer.

Der Ozonerzeuger 18 produziert das Ozon aus einem sauerstoffhaltigen Gas, im allgemeinen technischem Sauerstoff, der über die Leitung 19 an den Ozonerzeuger 18 herangeführt wird. Der Ozonerzeuger 18 arbeitet mit stiller elektrischer Entladung. Dabei entstehende Wärme wird durch einen Kühlkreislauf mit einem Kühlaggregat 20 abgeführt.

In dem Ozonerzeuger 18 wird der zugeführte Sauerstoff nicht quantitativ in Ozon umgesetzt, sondern es entsteht ein ozonhaltiges Gas, welches außer dem Ozon auch noch den nicht umgewandelten Sauerstoff enthält. Dieses ozonhaltige Gas wird in dem Injektor 16 dem Wasser zugemischt und gelangt mit dem Wasser über die Leitung 21 an die Stelle 46, wo sich das Gemisch mit der in der Hauptleitung 44 strömenden Hauptmenge vereinigt, die dann in einen Mischer 22 eintritt, in welchem Gas und Wasser intensiv durchmischt werden, um die Absorption des Ozons und des Sauerstoffs in dem Wasser zu fördern. Das so behandelte Wasser, das Sauerstoff und Ozon teils in absorbierter, teils in Form von Gasblasen enthält, die nicht entfernt werden müssen, tritt über die Leitung 23 in eine geschlossene Reaktorbehälteranordnung 24 ein, in welcher die Reaktionen insbesondere des Ozons mit den Schadstoffen in dem Wasser bei moderat erhöhten Temperaturen von etwa 20-40°C stattfinden. Die nur schematisch als Rechteck angedeutete Reaktorbehälteranordnung 24 kann aus einem einzelnen oder mehreren Behältern bestehen und ist im einzelnen in Fig. 1 der EP 478 583 B 1 beschrieben.

Die rein biologisch schwer oder nicht abbaubaren Schadstoffe in dem Wasser werden in der Reaktorbehälteranordnung 24 unter Einwirkung des Ozons gerade so weit anoxidiert oder konditioniert, daß sie nunmehr dem Angriff der aeroben Biologie in der Behälteranordnung 8 ausgesetzt sind und dort weiter abgebaut werden können. Die Ozonbehandlung in der Reaktorbehälteranordnung 24 braucht also die Schadstoffe in dem Wasser nur für den nachfolgenden bakteriellen Angriff in der Behälteranordnung 8 "sturmreif" zu machen, aber nicht notwendig selbst einen vollständigen Abbau der Schadstoffe herbeizuführen. Ohne die Anoxidierung in der Reaktorbehälteranordnung 24 wäre jedoch eine bakterielle Behandlung in der Behälteranordnung 8 wirkungslos.

Die in der Behälteranordnung 8 vorhandenen Bakterienkulturen sind als Lebewesen gegen Ozon empfindlich. Es muß daher vermieden werden, daß das an der Reaktorbehälteranordnung 24 auf der Leitung 25 austretende und in die Behälteranordnung 8 eingeleitete Wasser noch Ozon enthält.

Hierzu sind in dem Diagramm drei Maßnahmen schematisch angedeutet, die alternativ, aber auch zusammen eingesetzt werden können.

Die erste Maßnahme ist eine in dem Teilkreislauf II der Reaktorbehälteranordnung 24 nachgeschaltete UV-Bestrahlungseinrichtung 26, durch die das Wasser hindurchgeleitet wird und in der unter intensiver UV-Einwirkung das Ozon in sauerstoffhaltige Moleküle oder Radikale zersetzt wird, die die Biologie in der Behälteranordnung 8 nicht mehr schädigen, wenn das Wasser über die Leitung 27 an der Vereinigungsstelle V wieder in den Hauptkreislauf I eintritt, indem es in die Zuleitung 7 zu der Behälteranordnung 8 gelangt.

Es ist auch möglich, das auf der Leitung 25 aus der Reaktorbehälteranordnung 24 austretende Wasser über eine Leitung 29 durch eine Katalysatoreinheit 28 zu leiten, die das Ozon zerstört. Die Leitung 29 mit Katalysatoreinheit 28 gehört in diesem Fall zu dem Teilkreislauf II, der hierbei an der Vereinigungsstelle V' wieder in den Hauptkreislauf I einmündet, wobei an der Verienigungsstelle V' ozonfreies Wasser in die Leitung 7 eingespeist wird.

Eine weitere Möglichkeit besteht darin, das auf der Leitung 25 austretende Wasser, wenn es noch Restozon enthält, über die Leitung 31 in einen Schlammabsetzbehälter 30 einzuleiten, der Überschußschlamm aus den Behälteranordnungen 2 und 8 enthält. Das Restozon in dem über die Leitung 31 zugeführten Wasser wirkt hier im Sinne eines Abbaus der Schadstoffe und verbraucht sich dabei. Über die Leitung 32 zurückgeführte und in die Behälteranordnung 8 eingeleitetes Wasser enthält also kein Ozon mehr und kann die Biologie in der Behälteranordnung 8 nicht mehr gefährden.

Wenn der in dem Schlammabsetzbehälter 30 enthaltene Schlamm total ausreagiert ist, kann er über eine Abzugseinrichtung 33 aus dem Schlammabsetzbehälter 30 entfernt werden. Durch die gestrichelte Linie 47 ist angedeutet, daß dem Schlammabsetzbehälter 30 ozonhaltiges Gas auch direkt aus dem Ozonerzeuger 18 zugeführt werden kann.

In der Behälteranordnung 8, in der die Nitrifikation erfolgt, werden außerdem die restlichen CSB-Anteile abgebaut. Außerdem ergibt sich eine AOₓ-Reduzierung, weil die entsprechenden Schadstoff-Anteile bei der Ozonbehandlung angecrackt und biologisch verfügbar gemacht worden sind.

Aus der Behälteranordnung 8 tritt über die Leitungen 11 bzw. 34 aufbereitetes Wasser aus und gelangt über den Ablauf 35 in den Vorfluter. Ein Teil dieses Wassers wird über eine Leitung 36 abgezweigt und einem Klarwasserspeicher 37 zugeführt. Das Wasser dieses Speichers wird über eine Pumpe 38 umgewälzt und über einen Ventilator 39 belüftet. Über die Leitungen 40 und 41 gelangt das belüftete Wasser in die Behälteranordnungen 2 bzw. 8. Der Lufltsauerstoff kann zusätzlich zur Versorgung der Biologien dienen.

Von Zeit zu Zeit wird die Pumpe 38 eingeschaltet oder in ihrer Leistung erhöht, wodurch in den Behälteranordnungen 2 und 8 nach der bakteriellen Reaktion gebildeter Überschußschlamm über die Leitung 42,43 in den Schlammabsetzbehälter 30 überspült wird. Auf diese Weise werden die Reaktionsprodukte der bakteriellen Tätigkeit als Überschußschlamm immer wieder diskontinuierlich entfernt und aus dem Kreislauf herausgeholt.

## Patentansprüche

1. Verfahren zum Abbau von rein biologisch schwer oder nicht abbaubaren Schadstoffen in belastetem Wasser,
bei welchem aus sauerstoffhaltigem Gas ein ozonhaltiges Gas erzeugt wird, welches in das strömende Wasser eingemischt wird,
bei welchem das in dem Wasser enthaltene Ozon die in dem Wasser enthaltenen Schadstoffe zumindest anoxidiert,
und bei welchem anschließend das Wasser durch eine Biologie geleitet wird,
**dadurch gekennzeichnet**,
daß das Wasser in einem Hauptkreislauf (I) durch die Biologie geleitet wird, der einen kontinuierlichen Zulauf für belastetes Wasser und eine Einrichtung zur Entfernung in der Biologie gebildeter Feststoffe umfaßt,
daß das gebildete ozonhaltige Gas kontinuierlich in einen abgezweigten Teilkreislauf (II) eingemischt wird, der sich nach der Reaktion des Ozons an einer Vereinigungsstelle (V,V') wieder mit dem Hauptkreislauf (I) vereinigt,
und daß das Wasser ozonfrei in die Biologie eingeleitet wird.

2. Verfahren nach Anspruch 1, **dadurch gekennzeichnet**, daß das Wasser in Kreislaufrichtung vor der Vereinigungsstelle (V,V') eine anaerobe Biologie und in Kreislaufrichtung nach der Vereinigungsstelle (V,V') eine aerobe Biologie durchströmt.

3. Verfahren nach Anspruch 2, **dadurch gekennzeichnet**, daß das Wasser der Vereinigungsstelle (V,V') in ozonfreiem Zustand zugeleitet wird.

4. Verfahren nach Anspruch 3, **dadurch gekennzeichnet**, daß das gebildete Ozon so bemessen wird, daß es sich bei der Reaktion mit den Schadstoffen vollständig verbraucht.

5. Verfahren nach Anspruch 3, **dadurch gekennzeichnet**, daß in dem Wasser nach der Einwirkung des Ozons noch verbliebenes Ozon durch UV-Bestrahlung in sauerstoffhaltige Moleküle oder Radikale abgebaut wird, bevor es die Biologie erreicht.

6. Verfahren nach Anspruch 3, **dadurch gekennzeichnet**, daß in dem Wasser nach der Einwirkung des Ozons noch verbliebenes Ozon katalytisch zerstört wird, bevor das Wasser die Biologie erreicht.

7. Verfahren nach Anspruch 3, **dadurch gekennzeichnet**, daß in dem Wasser nach dr Einwirkung des Ozons noch verbliebenes Ozon in einen Schlammabsetzbehälter (30) mit Überschußschlamm aus der Biologie geleitet wird, um die in dem Überschußschlamm noch enthaltenen Schadstoffe anzuoxidieren und für weiteren biologischen Abbau zu konditionieren.

8. Verfahren nach einem der Ansprüche 2 bis 7, **dadurch gekennzeichnet**, daß der aeroben Biologie kontinuierlich nicht ozonbehandeltes Rohwasser mit Schadstoffen zudosiert wird, so daß in ein und derselben Stufe ozonbehandeltes Teilkreislaufwasser und nicht ozonbehandeltes Rohwasser aufbereitet werden.

9. Verfahren nach einem der Ansprüche 1 bis 8, **dadurch gekennzeichnet**, daß die Behandlungen im wesentlichen bei atmosphärischem, lediglich zur Umwälzung des Wassers geringfügig darüber erhöhtem Druck erfolgen.

10. Anlage zur Durchführung des Verfahrens nach einem der Ansprüche 1 bis 9,
a) mit einer Flüssigkeitsführung, in die mit rein biologisch schwer oder nicht abbaubaren Schadstoffen belastetes Wasser in einer Stelle (1) einspeisbar und durch eine Pumpenanordnung (10,16) umwälzbar ist;
b) mit einem mit sauerstoffhaltigem Gas zu speisenden Ozonerzeuger (18), der ein ozonhaltiges Gas erzeugt;
c) mit einer Eintragvorrichtung (16), mittels derer das ozonhaltige Gas in die Flüssigkeitsführung an einer Stelle eintragbar ist;
d) mit einer der Eintragvorrichtung (16) nachgeschalteten Anordnung (24) mit mindestens einem geschlossenen Reaktionsbehälter, in welcher das Ozon die Schadstoffe in der Flüssigkeit zumindest anoxidiert bzw. für einen weiteren biologischen Abbau konditioniert;
e) und mit einer in der Flüssigkeitsführung der Reaktionsbehälteranordnung der Reaktionsbehälteranordnung (24) nachgeschalteten Behälteranordnung mit einer Biologie,
**dadurch gekennzeichnet**,
f) daß die Flüssigkeitsführung einen Hauptkreislauf (I) umfaßt, der die Einspeisungsstelle (1), die Behälteranordnung mit der Biologie und einer Einrichtung zur Entfernung der in der Biologie gebildeten Feststoffe aufweist,
g) und daß ein Teilkreislauf (II) vorgesehen ist, der an einer in Strömungsrichtung der Behälteranordnung mit der Biologie nachgeschalteten Abzweigstelle (A) von dem Hauptkreislauf (I) abzweigt, die Eintragvorrichtung (16) und die Reaktionsbehälteranordnung (24) enthält und an einer der Behälteranordnung mit der Biologie vorgeschalteten Vereinigungsstelle (V,V') wieder in den Hauptkreislauf (I) einmündet.

11. Anlage nach Anspruch 10, **dadurch gekennzeichnet**, daß in dem Hauptkreislauf (I) der Vereinigungsstelle (V,V') eine Behälteranordnung (2) mit einer anaeroben Biologie vorgeschaltet und eine Behälteranordnung (8) mit einer aeroben Biologie nachgeschaltet ist.

12. Anlage nach Anspruch 11, **dadurch gekennzeichnet**, daß Mittel vorgesehen sind, die sicherstellen, daß das Wasser des Teilkreislaufs (II) an der Vereinigungsstelle (V,V') in ozonfreiem Zustand in den Hauptkreislauf (1) eintritt.

13. Anlage nach Anspruch 12, **dadurch gekennzeichnet**, daß die Mittel eine Dosiereinrichtung für das mit dem ozonhaltigen Gas an der Eintragvorrichtung (16) eingetragene Ozon umfaßt.

14. Anlage nach Anspruch 12, **dadurch gekennzeichnet**, daß die Mittel eine der Reaktionsbehälteranordnung (24) nachgeschaltete UV-Bestrahlungsanlage (26) umfassen.

15. Anlage nach Anspruch 12, **dadurch gekennzeichnet**, daß die Mittel eine der Reaktionsbehälteranordnung (24) nachgeschaltete Katalysatoreinheit (28) umfassen.

16. Anlage nach Anspruch 14 oder 15, **dadurch gekennzeichnet**, daß ein Schlammabsetzbehälter (30) vorgesehen ist, in den Überschußschlamm aus der Behälteranordnung (8) für die aerobe Biologie einspülbar ist, in welchen die Reaktorbehälteranordnung (24) verlassendes noch Restozon enthaltendes Gas einleitbar ist und der eine Einrichtung (33) zum Abzug aus reagiertem Schlamms aufweist.

17. Anlage nach Anspruch 16, **dadurch gekennzeichne**t, daß in den Schlammabsetzbehälter (30) über eine Leitung (47) auch direkt ozonhaltiges Gas aus dem Ozonerzeuger (18) einleitbar ist.

18. Anlage nach einem der Ansprüche 10 bis 17, **dadurch gekennzeichnet**, daß eine Rückspüleinrichtung (38,40,41) vorgesehen ist, mittels derer durch Einspülen von Klarwasser intermittierend Schlamm aus den beiden Biologiebehälteranordnungen (2,8) in den Schlammabsetzbehälter (30) überspülbar ist.

19. Anlage nach Anspruch 18, **dadurch gekennzeichnet**, daß ein Ventilator (39) vorgesehen ist, mittels dessen dem Klarwasser, welches zur Rückspülung benutzt wird, Luft beimischbar ist.

20. Anlage nach einem der Ansprüche 10 bis 19, **dadurch gekennzeichnet**, daß der Ozonerzeuger (18) mit stiller Entladung arbeitet.

## Claims

1. Process for degrading pollutants in polluted water which are difficult to degrade or are nondegradable purely by biological means, in which a gas containing ozone which is mixed into the flowing water is generated from gas containing oxygen, in which the ozone contained in the water at least oxidises the pollutants contained in the water, and in which the water is subsequently led through a biological treatment apparatus; characterised in that the water is led through the biological treatment apparatus in a main cycle (I) which comprises a continuous inlet for polluted water and a device for removing solids formed in the biological treatment apparatus, in that the gas containing ozone which is formed is continuously mixed into a branched partial cycle (II) which joins with the main cycle (I) again at a joining point (V, V') after the reaction of the ozone, and in that the water is led into the biological treatment apparatus ozone-free.

2. Process according to Claim 1, characterised in that the water flows through an anaerobic biological treatment apparatus in front of the joining point (V, V') in cycle direction and flows through an aerobic biological treatment apparatus after the joining point (V, V') in cycle direction.

3. Process according to Claim 2, characterised in that the water is supplied to the joining point (V, V') in ozone-free condition.

4. Process according to Claim 3, characterised in that the ozone formed is dimensioned in such a way that it is completely consumed in the reaction with the pollutants.

5. Process according to Claim 3, characterised in that ozone still remaining in the water after the action of the ozone is broken down into molecules or radicals containing oxygen by UV irradiation before it reaches the biological treatment apparatus.

6. Process according to Claim 3, characterised in that ozone still remaining in the water after the action of the ozone is catalytically destroyed before the water reaches the biological treatment apparatus.

7. Process according to Claim 3, characterised in that ozone still remaining in the water after the action of the ozone is led out of the biological treatment apparatus into a sludge settling tank (30) with excess sludge in order to oxidise the pollutants still contained in the excess sludge and to condition them for further biodegrading.

8. Process according to one of Claims 2 to 7, characterised in that non-ozone-treated raw water with pollutants is continuously metered to the aerobic biological treatment apparatus, so that ozone-treated partial cycle water and non-ozone-treated raw water are processed in one and the same stage.

9. Process according to one of Claims 1 to 8, characterised in that the treatments substantially take place at atmospheric pressure, increased only slightly above atmospheric to circulate the water.

10. Installation for implementing the process according to Claims 1 to 9,
a) with a liquid system into which water polluted with pollutants difficult to degrade or nondegradable purely by biological means may be supplied at a point (1) and may be circulated by a pump arrangement (10, 16);
b) with an ozone generator (18) which generates a gas containing ozone and is to be supplied with a gas containing oxygen;
c) with an introduction device (16) by means of which the gas containing ozone may be introduced into the liquid system at a point;
d) with an arrangement (24) downstream of the introduction device (16) with at least one closed reaction tank, in which the ozone at least oxidises the pollutants in the liquid and/or conditions them for further biodegrading;
e) and with a tank arrangement with a biological treatment apparatus connected downstream of the reaction tank arrangement (24) in the liquid system of the reaction tank arrangement.
characterised in that
f) the liquid system comprises a main cycle (I) which has the supply point (1), the tank arrangement with the biological treatment apparatus and a device for removing the solids formed in the biological treatment apparatus;
g) and in that a partial cycle (II) is provided, which branches off from the main cycle (I) at a branch point (A) downstream of the tank arrangement with the biological treatment apparatus in the direction of flow, contains the introduction device (16) and the reaction tank arrangement (24) and opens in the main cycle (I) again at a joining point (V, V') upstream of the tank arrangement with the biological treatment apparatus.

11. Installation according to Claim 10, characterised in that in the main cycle (I) a tank arrangement (2) with an anaerobic biological treatment apparatus is connected upstream of and a tank arrangement (8) with aerobic biological treatment apparatus is connected downstream of the joining point (V, V').

12. Installation according to Claim 11, characterised in that means are provided which ensure that the water of the partial cycle (II) enters the main cycle (I) at the joining point (V, V') in ozone-free condition.

13. Installation according to Claim 12, characterised in that the means comprises a metering device for ozone introduced at the introduction device (16) with the gas containing ozone.

14. Installation according to Claim 12, characterised in that the means comprise a UV irradiation unit (26) downstream of the reaction tank arrangement (24).

15. Installation according to Claim 12, characterised in that the means comprise a catalyst unit (28) downstream of the reaction tank arrangement (24).

16. Installation according to Claim 14 or 15, characterised in that a sludge settling tank (30) is provided, into which excess sludge from the tank arrangement (8) for the aerobic biological treatment apparatus may be washed, in to which gas still containing residual ozone and leaving the reactor tank arrangement (24) may be introduced and which has a device (33) for removing fully reacted sludge.

17. Installation according to Claim 16, characterised in that gas containing ozone may also be directly introduced from the ozone generator (18) in the sludge settling tank (30) by means of a line (47).

18. Installation according to one of Claims 10 to 17, characterised in that a backwash device (38, 40, 41) is provided, by means of which sludge from the two biological treatment apparatus tank arrangements (2, 8) may be washed over into the sludge settling tank (30) intermittently by washing in clean water.

19. Installation according to Claim 18, characterised in that a fan (39) is provided, by means of which air may be admixed with the clean water which is used for backwashing.

20. Installation according to one of Claims 10 to 19, characterised in that the ozone generator (18) operates with silent discharge.

## Revendications

1. Procédé de dégradation de polluants, difficilement ou pas dégradables par voie uniquement biologique, qui sont présents dans de l'eau chargée, dans lequel :
à partir d'un gaz oxygéné, on produit un gaz contenant de l'ozone lequel est incorporé à l'eau en circulation,
l'ozone contenue dans l'eau fait subir au moins un début d'oxydation aux polluants contenus dans l'eau,
ensuite on envoie l'eau dans une biologie,
**caractérisé en ce** que
on envoie l'eau dans un circuit principal (I) à travers la biologie qui comporte une entrée continue d'eau chargée et un appareil pour l'élimination des matières solides formées dans la biologie,
le gaz contenant de l'ozone formée est incorporé, d'une manière continue, dans un circuit auxiliaire dérivé (II) qui se combine à nouveau au circuit principal (I), après la réaction de l'ozone, en un endroit de combinaison (V, V'), et
on introduit dans la biologie de l'eau sans ozone.

2. Procédé suivant la revendication 1, **caractérisé en ce** que l'eau, dans le sens de circulation, en amont de l'endroit de combinaison (V, V'), traverse une biologie anaérobie et, dans le sens de circulation, en aval de l'endroit de combinaison (V, V'), une biologie aérobie.

3. Procédé suivant la revendication 2, **caractérisé en ce** que l'eau est envoyée à l'endroit de combinaison (V, V'), en état sans ozone.

4. Procédé suivant la revendication 3, **caractérisé en ce** qu'on mesure l'ozone créée de façon qu'elle se détruise complètement par la réaction avec les polluants.

5. Procédé suivant la revendication 3, **caractérisé en ce** que, dans l'eau, après l'action de l'ozone, l'ozone, qui reste encore est dégradée par rayonnement UV dans des molécules ou des radicaux contenant de l'oxygène, avant d'atteindre la biologie.

6. Procédé suivant la revendication 3, **caractérisé en ce** que, dans l'eau, après l'action de l'ozone, l'ozone, qui reste encore, est détruite par catalyse, avant d'atteindre la biologie.

7. Procédé suivant la revendication 3, **caractérisé en ce que**, dans l'eau, après l'action de l'ozone, l'ozone, qui reste encore, est envoyée dans un décanteur de boue (30) avec boue excédentaire de la biologie, pour débuter l'oxydation des polluants encore contenus dans la boue excédentaire et mettre en condition pour une autre dégradation biologique.

8. Procédé suivant l'une des revendications 2 à 7, **caractérisé en ce** que, à la biologie aérobie, de l'eau brute ne contenant pas d'ozone est ajoutée et dosée d'une manière continue avec les polluants, de façon à traiter, dans une seule et même étape, l'eau du circuit auxiliaire contenant de l'ozone et l'eau brute ne contenant pas d'ozone.

9. Procédé suivant l'une des revendications 1 à 8, **caractérisé en ce** que le traitement a lieu essentiellement à la pression atmosphérique, simplement un peu plus élevée pour aider la circulation de l'eau.

10. Installation pour mettre en oeuvre le procédé suivant une des revendications 1 à 8, qui comporte :
a) une conduite de liquide dans laquelle l'eau chargée de matières polluantes, dégradables difficilement ou non par voie uniquement biologique, peut être appliquée dans un endroit (1) et être mise en circulation par un dispositif de pompes (10, 16) ;
b) un producteur d'ozone (18) servant à alimenter en gaz oxygéné qui produit un gaz contenant de l'ozone ;
c) un dispositif d'admission (16) par où le gaz contenant de l'ozone peut entrer dans la conduite de liquide à un endroit ;
d) un dispositif (24), en aval du dispositif d'admission (16), avec au moins une cuve de réacteur fermée dans laquelle l'ozone fait au moins subir un début d'oxydation aux matières polluantes dans la conduite de liquide, ou les met en condition pour une autre dégradation biologique ; et
e) un dispositif de cuve avec une biologie, monté en aval de la cuve de réacteur (24), dans la conduite de liquide,
**caractérisé en ce** que
f) la conduite de liquide comprend un circuit principal (I) qui comporte l'endroit d'alimentation (1), le dispositif de cuve avec la biologie et un dispositif pour enlever les matières créées dans la biologie, et
g) un circuit auxiliaire (II) est prévu qui dérive du circuit principal (I) en un endroit (A) relié en aval, dans le sens du courant, du dispositif de cuve avec la biologie, qui contient le dispositif d'admission (16) et la cuve de réacteur (24), et qui débouche encore sur un endroit de combinaison (V, V'), relié en amont du dispositif de cuve, avec la biologie dans le circuit principal (I).

11. Installation suivant la revendication 10, **caractérisée en ce** que, dans le circuit principal (I), à l'endroit de combinaison (V, V'), est relié en amont un dispositif conteneur (2) avec une biologie anaérobie et est relié, en aval un dispositif conteneur (8), avec une biologie aérobie.

12. Installation suivant la revendication 11, **caractérisée en ce** que des moyens sont prévus qui assurent que l'eau du circuit auxiliaire (II) entre dans le circuit principal (I), à l'endroit de combinaison (V, V') en état libre d'ozone.

13. Installation suivant la revendication 12, **caractérisée en ce** que les moyens comprennent un dispositif doseur pour l'ozone appliquée avec le gaz contenant de l'ozone sur le dispositif d'alimentation (16).

14. Installation suivant la revendication 12, **caractérisée en ce** que les moyens comprennent une installation de rayonnement UV (26) montée en aval du dispositif conteneur de réaction (24).

15. Installation suivant la revendication 12, **caractérisée en ce** que les moyens comprennent une unité de catalyseur (28) montée en aval du dispositif conteneur de réaction (24).

16. Installation suivant la revendication 14 ou 15, **caractérisée en ce** que un décanteur de boue (30) est prévu, dans lequel peut être rincée la boue en excès hors de l'appareil conteneur (8) pour la biologie aérobie, dans lequel le dispositif conteneur de réaction (24) peut être amené pour abandonner du gaz qui contient encore des restes d'ozone et qui présente un dispositif (33) pour la hotte hors des boues qui réagissent.

17. Installation suivant la revendication 16, **caractérisée en ce** que, dans le décanteur de boue (30) par une conduite (47) peut être introduit aussi directement du gaz contenant de l'ozone, hors du producteur d'ozone (18).

18. Installation suivant l'une des revendications 10 à 17, **caractérisée en ce** que un appareil de lavage en retour (38, 40, 41) est prévu au moyen duquel, par entrée de lavage d'eau claire, de la boue discontinue peut être rincée hors des deux dispositifs de conteneur biologique (2, 8) dans le décanteur de boue (30).

19. Installation suivant la revendication 18, **caractérisée en ce** qu'est prévu un ventilateur (39) au moyen duquel on peut mélanger de l'air à l'eau claire qui est nécessaire pour le lavage en retour.

20. Installation suivant l'une des revendications 10 à 19, **caractérisée en ce** que le producteur d'ozone (18) travaille avec décharge silencieuse.
